# EUROPÄISCHE PATENTSCHRIFT

(11) **EP 0 976 354 B1**
(45) Veröffentlichungstag und Bekanntmachung des Hinweises auf die Patenterteilung: **01.10.2003**
(21) Anmeldenummer: 99112901.6
(22) Anmeldetag: 03.07.1999
(51) Int. Cl.: A47J 43/12

(54) **Sahneapparat**
Whipped cream apparatus
Machine pour faire de la crème fouettée

(30) Priorität: 29.07.1998 DE 19834066
(43) Veröffentlichungstag der Anmeldung: 02.02.2000
(73) Patentinhaber: Jüngel & Severin Inh. Angelika Möckl e.K., 82467 Garmisch-Partenkirchen (DE)
(72) Erfinder: Möckl, Karl-Heinz, 82496 Oberau (DE)
(74) Vertreter: Flosdorff, Jürgen, Dr.

(56) Entgegenhaltungen:
- DE-U- 8 804 879
- FR-A- 2 224 689
- FR-A- 2 385 962

## Beschreibung

Die Erfindung betrifft einen Sahneapparat mit einem Behälter, in den Sahne eingefüllt wird, mit einem aufgeschraubten Kopfstück, das eine Aufnahme für eine Sahne-Druckgaskapsel hat, die durch eine Bohrung mit dem Innenraum des Behälters verbunden ist, wobei das Kopfstück ferner einen Ventilstift, der verschieblich in einer das Kopfstück durchgreifenden Ventilstift-Bohrung sitzt, und einen Sahne-Auslaßkanal hat.

In einen derartigen Sahneapparat wird flüssige, gut gekühlte Sahne eingefüllt und nach dem Aufschrauben des Kopfstücks eine Sahne-Druckgaskapsel in deren Aufnahmeeinrichtung eingeschraubt, bis ein Druckstift die Kapsel öffnet und Druckgas in den Behälter eintritt. Anschließend wird der Sahneapparat ein paarmal kräftig geschüttelt, womit sich die flüssige Sahne in Schlagsahne verwandelt, die damit fertig zur Abgabe aus dem Sahneapparat ist.

Hierzu wird der Ventilstift, der von einem an dem Kopfstück befestigten Ventilbügel so aus dem Kopfstück herausgezogen wird, daß sein Ventiltellerring dicht an dem Ventilsitz der Ventilstift-Bohrung anliegt, mittels des Ventilbügels einwärts gedrückt, wodurch Sahne in den Sahne-Auslaßkanal eintreten kann, der an der Außenseite des Kopfstücks in eine Gummitülle einmündet, die auf einem Ansatz des Kopfstücks befestigt ist.

Sahneapparate dieser Art arbeiten mit einem Betriebsdruck, der normalerweise etwa bei 20 bar liegt. Wenn ein Sahneapparat nicht vorschriftsmäßig betätigt wird und durch eine oder mehrere SahneSahne-Druckgaskapseln mehrfach unter Druck gesetzt wird, kann hierdurch theoretisch ein maximaler Druck von etwa 60 bar in dem Behälter entstehen. Aus Sicherheitsgründen hat der Sahneapparat eine solche Festigkeit, daß er einem Druck bis zu etwa 100 bar standhalten kann, so daß der Behälter erst bei noch größeren Drücken deformiert wird und zerreißt.

Wenn der normale Betriebsdruck beträchtlich überschritten wird, schießt die Sahne mit entsprechend großem Druck aus der Gummitülle, wenn der Ventilstift betätigt wird, was natürlich sehr unerwünscht ist. Im Laufe der Zeit kann sich auch das Gewinde des Kopfstücks abnutzen, so daß sich die Verschraubung bereits bei einem Innendruck lösen kann, der beträchtlich unter dem Druck liegt, dem der Behälter an sich standhält. Außerdem ist nicht ganz auszuschließen, daß aus Unachtsamkeit ein aus einem Kühlschrank entnommener Sahneapparat auf einer heißen Unterlage wie einem Ofen abgestellt wird, wodurch sich der Druck in dem Behälter auf gefährliche Weise erhöht.

FR-A- 2 385 962 offenbart einen Sahneapparat mit den Merkmalen des Oberbegriff des Patentanspruchs 1, bei dem ein Ventilkörper in einer Durchgangsbohrung des Deckels sitzt, die Abschnitte jeweils unterschiedlicher Durchmesser hat.

DE 88 04 879 U betrifft ein Abgabe- und Sicherheitsventil für einen Behälter mit aufgeschäumter Sahne, bei dem eine Berstfolie eine quer durch den Ventilkörper führende Bohrung überdeckt, die in den Sahneauslaßkanal einmündet.

FR-A-2 224 889 offenbart einen Verschlußkörper am oberen Ende eines Sahne-Auslaßkanals, der durch Betätigung eines Hebels entgegen der Kraft einer Feder nach oben verlagert wird, so daß Sahne aus dem Kanal austreten kann.

Der vorliegenden Erfindung liegt die Aufgabe zugrunde, einen Sahneapparat der betrachteten Art so weiter zu entwickeln, daß die oben beschriebene Probleme vermieden sind und die Sicherheit bei der Handhabung des Sahneapparats erhöht ist.

Diese Aufgabe wird erfindungsgemäße durch die Merkmale des Patentanspruchs 1 gelöst.

Vorteilhafte Ausgestaltungen der Erfindung sind in den Unteransprüchen gekennzeichnet.

Die Erfindung sieht vor, daß der Ventilstift mit einem Sicherheitsventil kombiniert ist, das bei Überschreiten eines vorgegebenen Drucks in dem Behälter einen Durchlaß zwischen dem Innenraum des Behälters und dem Sahne-Auslaßkanal des Kopfstücks freigibt. Der das Sicherheitsventil öffnende Druck kann in dem Bereich von etwa 30 bis 40 bar liegen und bevorzugt etwa 35 bar betragen, ohne daß die Erfindung hierauf beschränkt ist.

Damit ist gewährleistet, daß in dem Sahneapparat stets nur ein solcher Maximaldruck herrscht, daß die Sahne auf vorgesehene Weise aus dem Gerät abgegeben wird und nicht -wie dies bei hohem Überdruck geschehen kann- weit in das Umfeld des Sahneapparats verspritzt wird.

Weiter ist gewährleistet, daß sich infolge eines übermäßigen Innendrucks das Kopfstück löst, wenn das Gewinde abgenutzt oder stellenweise schadhaft ist, wobei natürlich auch ausgeschlossen ist, daß der Behälter infolge eines enormen Überdrucks aufplatzt. Damit ist ein einwandfreier Gebrauch des Sahneapparates gefördert und die Sicherheit des Gerätes beträchtlich erhöht.

Weiter wird vorgeschlagen, daß der Ventilstift im Bereich seines im Inneren des Sahneapparats befindlichen Endabschnitts einen Ventiltellerring aufweist, der die Form eines Kegelstumpfes haben kann und in der Verschlußstellung (gegebenenfalls unter Zwischenschaltung eines Dichtungsrings) an einem entsprechend ausgebildeten Ventilsitz der Ventilstift-Bohrung anliegt, und daß unter dem Ventiltellerring das Sicherheitsventil angebracht ist. Hierzu schließt sich an den Ventiltellerring ein hülsenförmiger einstückig angeformter Abschnitt mit einem Außengewinde an, der mit dem entsprechenden Gegengewinde eines Sicherheitsentilgehäuses in Eingriff steht.

Das Ventilgehäuse hat eine Bodenwand mit einer Durchgangsbohrung. Bevorzugt ist an der Innenseite der Bodenwand um die Durchgangsbohrung herum ein ringförmiger Ansatz angeformt, auf der ein Dichtungskörper aufliegt.

Der Dichtungskörper hat zweckmäßigerweise eine Napfform mit einer geschlossenen Bodenwand, an deren Unterseite eine Dichtungsscheibe angeordnet sein kann. Wenn diese Dichtungsscheibe aus Teflon besteht, beispielsweise einem weichen Teflon, verhindert sie zuverlässig, daß der Dichtungskörper im Laufe der Zeit durch Sahnepartikel an der Bodenwand anklebt, wodurch sich in unerwünschter Weise der Druck erhöhen würde, bei dem das Sicherheitsventil öffnet.

Weiter ist vorgesehen, daß zwischen dem Umfang des Dichtungskörpers und der Innenwand des Gehäuses ein Zwischenraum oder mehrere Zwischenräume verbleibt/verbleiben. Hierzu kann vorgesehen sein, daß der Dichtungskörper im wesentlichen eine Sechseck-Form hat mit gerundeten Ecken, die eine Verschiebung des Dichtungskörpers in dem Ventilgehäuse nicht erschweren. Im Bereich der ebenen Wandflächen des Dichtungskörpers verbleiben damit ausreichend große Durchlässe für das Druckgas, wenn der Dichtungskörper von der Bodenwand des Sicherheitsventilgehäuses abgehoben ist.

Mit großem Vorteil wird vorgeschlagen, daß der Sahne-Auslaß-Kanäl seitlich in die Ventilbohrung einmündet.

Weiter ist vorgesehen, daß in der Umfangsfläche des Ventilstiftes eine langgestreckte Vertiefung, bevorzugt in Form einer in axialer Richtung verlaufenden kerbenförmigen Sicke ausgebildet ist, die in der Öffnungsstellung des Ventilstiftes zumindest von dem freigegebenen Ventilsitz bis zur Einmündung des Sahne-Auslaßkanals reicht, und daß eine Sicherheitsventilbohrung durch den zugeordneten Endabschnitt des Ventilstiftes verläuft und in die Vertiefung einmündet. Die Sicherheitsventilbohrung mündet dabei bevorzugt in die Mitte der Vertiefung ein, wo diese am tiefsten ist.

Zweckmäßigerweise hat der Ventilstift an dem Gewindeabschnitt eine hohle Hülsenform mit einer die stirnseitige Öffnung der Sicherheitsventilbohrung umgebenden Ringschulter, an der sich eine Schraubenfeder abstützt, die mit ihrem anderen Ende an der Bodenwand des Dichtungskörpers anliegt.

Wenn in dem Sahneapparat ein Innendruck herrscht, der die Kraft der Schraubenfeder, mit der diese den Dichtungskörper an die Bodenwand des Sicherheitsventilgehäuses andrückt, übersteigt, wird die Schraubenfeder von dem sich anhebenden Dichtungskörper zusammengedrückt, und es entweicht Druckgas durch die Durchgangsbohrung der Bodenwand des Sicherheitsventilgehäuses, zwischen der Umfangswand des Dichtungskörpers und der Innenwand des Ventilgehäuses, durch die Sicherheitsventilbohrung im Endabschnitt des Ventilstiftes zu der kerbenförmigen Sicke und von dort durch den Sahne-Auslaßkanal zur Außenseite des Gerätes.

Der Druck innerhalb des Sahneapparates wird soweit abgebaut, bis die Schraubenfeder wieder den Dichtungskörper gegen die Durchgarigsbohrung in der Bodenwand des Ventilgehäuses preßt, so daß das Sicherheitsventil schließt. Damit herrscht nun der gewünschte maximale Betriebsdruck in dem Sahneapparat.

Nach einem weiteren Vorschlag der Erfindung ist vorgesehen, daß die Gewindeabschnitte des Ventilstiftes und des Sicherheitsventilgehäuses so miteinander verklebt sind, daß die Verschraubung erst ab einer vorgegebenen hohem Temperatur gelöst werden kann. Diese Temperatur kann etwa 200°C betragen. Damit ist gewährleistet, daß ein Benutzer des Sahneapparates das Sicherheitsventil nicht öffnen kann, da anderenfalls bei einem unsachgemäßen Zusammenbau des Sicherheitsventils die Funktionsfähigkeit des Sahneapparates beeinträchtigt wäre.

Nachfolgend wird eine Ausführungsform der Erfindung in näheren Einzelheiten mit Bezug auf die beigefügte Zeichnung beschrieben.

Dabei zeigen:
- Fig. 1: das Kopfstück eines Sahneapparates in einem Längsschnitt;
- Fig. 2: einen Ventilstift mit angeschraubtem Sicherheitsventil in einer teilweise geschnittenen Darstellung;
- Fig. 3A-3C: den Ventilstift gemäß Fig. 2 in einer teilweise geschnittenen Seitenansicht, einem Vertikalschnitt durch den Bereich der Sicherheitsventilbohrung sowie einem Horizontalschnitt entlang der Linie A-A in Fig. 3B;
- Fig. 4: einen Vertikalschnitt durch das Gehäuse des Sicherheitsventils;
- Fig. 5A und 5B: einen Vertikalschnitt durch den Dichtungskörper sowie eine Aufsicht auf denselben.

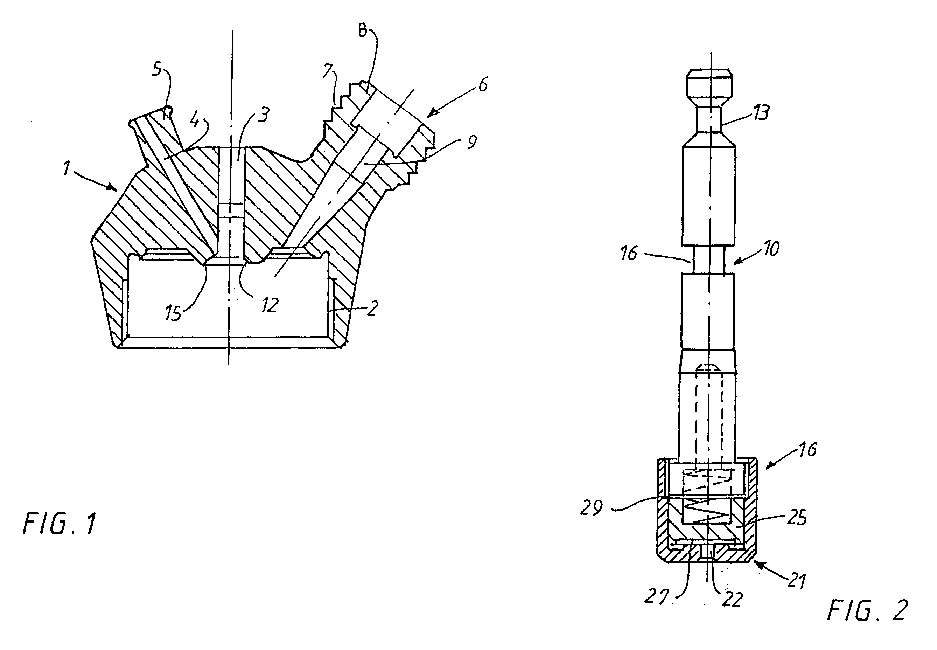

In Figur 1 sind nur die Bestandteile eines Kopfstücks 1 dargestellt, die im Zusammenhang mit der vorliegenden Erfindung von Bedeutung sind. Das Kopfstück 1 hat an seinem in der Figur unteren, im wesentlichen zylindrischen Abschnitts ein Innengewinde 2, mit dem das Kopfstück 1 auf einen nicht dargestellten Behälter geschraubt wird.

Das Kopfstück 1 wird mittig von einer Ventilstift-Bohrung 3 durchgriffen, die in axialer Richtung des Kopfstücks und des Behälters verläuft. In die Ventilstiftbohrung 3 mündet ein Sahne-Auslaßkanal 4 ein, der im Winkel zur Ventilstift-Bohrung 3 verläuft und an einem Vorsprung 5 des Kopfstücks. 1 zur Außenseite hin austritt. Auf den Vorsprung 5 wird beim Gebrauch des Sahneapparates eine in der Figur nicht dargestellte Gummitülle aufgesetzt.

Das Kopfstück 1 enthält ferner eine insgesamt mit dem Bezugszeichen 6 bezeichnete Aufnahmeeinrichtung für eine Sahne-Druckgaskapsel, die mittels einer auf das Außengewinde 7 eines Ansatzes 8 aufgeschraubten Überwurfmutter (nicht dargestellt) soweit in die Aufnahmerichtung 6 eingeführt wird, bis ein Druckstift die Kapsel öffnet, so daß deren Druckgas durch eine Bohrung 9 ins Innere des Behälters strömt. Anschließend wird der Sahneapparatur in den zuvor flüssige, gut gekühlte Sahne eingefüllt wurde, ein paarmal kurz und kräftig geschüttelt, wodurch aus der flüssigen Sahne Schlagsahne entsteht, woraufhin die Druckgaskapsel wieder abgeschraubt wird und sich der Kanal 9 selbsttätig verschließt.

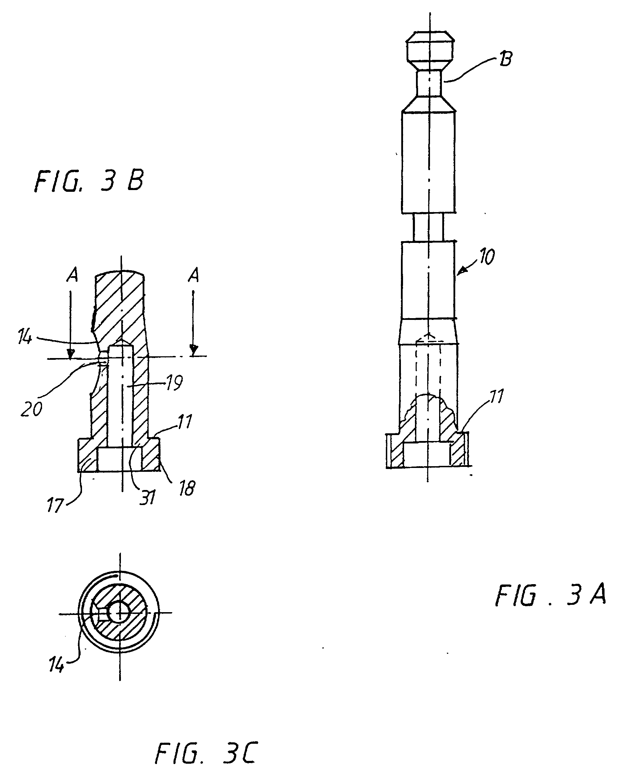

In der Ventilstift-Bohrung 3 sitzt der in den Figuren 2 und 3 dargestellte Ventilstift 10, der in der Schließstellung mit einem Ventiltellerring 11 -unter Zwischenschaltung eines in der Figur nicht dargestellten 0-Ringes- an dem Ventilsitz 12 (siehe Figur 1) anliegt. Der Ventilstift 10 ist von einem in der Figur nicht dargestellten Ventilbügel gehalten, der in eine Nut 13 an dem außerhalb des Sahneapparates verbleibenden Kopfende des Ventilstiftes 10 eingreift und den Ventilstift (in der Darstellung der Fig. 1) nach oben zieht, wodurch der Ventiltellerring 11 (mit seinem Dichtring) gegen den Ventilsitz 12 gedrückt wird. In dieser Stellung kann weder Sahne noch Druckgas aus dem Inneren des Sahneapparates entweichen.

Wie die Figuren 3B und 3C zeigen, ist eine kerbenförmige Sicke 14 in der Umfangswand des Ventilstiftes 10 ausgebildet, die in axialer Richtung so langgestreckt ist, daß sie bei einwärts gedrücktem Ventilstift 10 zumindest von dem freigegebenen Ventilsitz 12 bis zur Einmündung 15 des Sahne-Auslaßkanals 4 reicht. Hierzu kann -bei Überkopflage des Sahneapparates- Sahne durch die Sicke 14 in den Sahne-Auslaßkanal 4 und von dort nach außen austreten. Da der Ventilstift 10 auch in der einwärts gedrückten Öffnungsstellung an der Innenwand der Ventilstift-Bohrung 3 anliegt, kann durch die Ventilstift-Bohrung 3 ansonsten weder Sahne- noch Druckluft durchtreten, was auch durch einen in einer Ringnut 16 sitzenden (in der Zeichnung nicht dargestellten) O-Ring gewährleistet ist. An dem dem Inneren des Sahneapparates zugewandten Endabschnitt ist der Ventilstift mit einem insgesamt mit dem Bezugszeichen 16 versehenen Sicherheitsventil verbunden. Hierzu setzt sich der Ventilstift 10 im Anschluß an den Ventiltellerring 11 in einem hülsenförmigen Abschnitt 17 fort, der ein Außengewinde 18 hat. Eine zentrale Sicherheitsventilbohrung 19 verläuft in axialer Richtung mittig durch den Endbereich des Ventilstiftes 10 bis zum Bereich der Sicke 14, in die eine Querbohrung 20 mittig einmündet, die am anderen Ende in die Sicherheitsventilbohrung 19 einmündet.

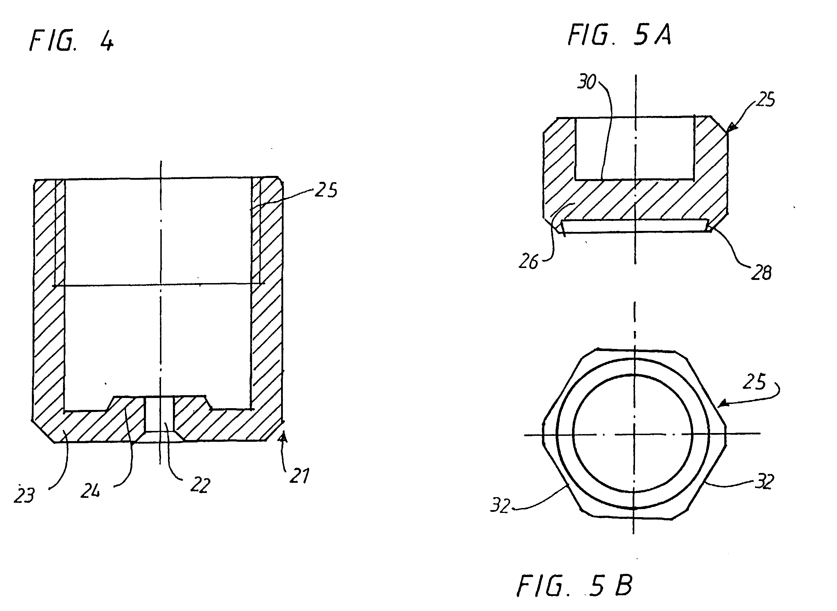

Ein Sicherheitsventilgehäuse 21 hat im wesentlichen eine Napfform mit einer Durchgangsbohrung 22 mittig in der Bodenwand 23. An der Innenseite der Bodenwand 23 ist um die Durchgangsbohrung 22 herum ein ringförmiger Vorsprung 24 angeformt. Das Sicherheitsventilgehäuse 21 hat in seinem in Figur 4 oberen Endbereich ein Innengewinde 25, mit dem das Gehäuse 21 auf den Gewindeabschnitt 18 des Ventilstiftes 10 aufgeschraubt wird.

Ein Dichtungskörper 25 sitzt in dem Sicherheitsventilgehäuse 21 und hat ebenfalls im wesentlichen eine Napfform mit einer geschlossenen Bodenwand 26, in deren Unterseite eine kreisrunde Teflonscheibe 27 eingelassen ist, die von einem Ringvorsprung 28 des Dichtungskörpers 25 umfaßt wird. Der Dichtungskörper 25 liegt mit der Teflonscheibe 27 auf dem Ringvorsprung 24 des Sicherheitsventilgehäuses 21 auf.

Hierzu ist eine Schraubendruckfeder 29 (siehe Figur 2) zwischen der Innenwand 30 des Dichtungskörpers 25 und einer in Fig. 3B unteren Ringschulter 31 des Ventilstifts 10 gespannt.

Der Dichtungskörper 25 hat in der Aufsicht eine Sechseckform mit abgeflachten Ecken, wie Fig. 5B zeigt. Damit verbleiben zwischen der Umfangswand des Dichtungskörpers 25 und der Innenwand des Sicherheitsventilgehäuses 21 im Bereich der ebenen Wandabschnitte 32 Durchlässe für das Druckgas, das bei einem übermäßigen Innendruck in dem Sahneapparat nach Abheben des Dichtungskörpers 25 von der Durchgangsbohrung 22 durch die Sicherheitsventilbohrung 19, 20 sowie den Sahne-Auslaßkanal 4 aus dem Sahneapparat austritt.

Die Gewindeabschnitte 25 und 18 sind mit einem Klebemittel miteinander verklebt, das erst bei einer Temperatur von etwa 200° C so erweicht, daß das Gehäuse 21 abgeschraubt werden kann.

## Patentansprüche

1. Sahneapparat mit einem Behälter, in den flüssige Sahne eingefüllt wird, und mit einem aufgeschraubten Kopfstück (1), das eine Aufnahmeeinrichtung (6) für eine SahneSahne-Druckgaskapsel, die durch eine Druckgasbohrung (9) mit dem Inneren des Behälters verbunden ist, einen Ventilstift ( 10), der verschieblich in einer das Kopfstück (1) durchgreifenden Ventilstift-Bohrung (3) sitzt, und einen Sahne-Auslaßkanal (4) für die fertige Sahne aufweist, wobei der Ventilstift (10) mit einem Sicherheitsventil (21, 25, 29) versehen ist, das bei Überschreiten eines vorgegebenen Drucks in dem Behälter einen Durchlaß (19, 20) zwischen dessen Innenraum und dem Sahne-Auslaßkanal (4) freigibt,
**dadurch gekennzeichnet,**
**daß** der Ventilstift (10) einen Ventiltellerring (11) aufweist, an den ein hülsenförmiger Abschnitt (17) mit einem Gewinde (18) anschließt, das mit einem Gewinde eines Sicherheitsventilgehäuses (21, in Eingriff steht, daß das Sicherheitsventilgehäuse (21) eine Bodenwand (23) mit einer Durchgangsbohrung (22) hat und daß ein Dichtungskörper (25) an die Bodenwand angedrückt ist.

2. Sahneapparat nach Anspruch 1,
**dadurch gekennzeichnet, daß** der Ventiltellerring (11) in der Verschlußstellung unter Zwischenschaltung eines O-Rings an einem Ventilsitz (12) der Ventilstift-Bohrung (3) anliegt,

3. Sahneapparat nach Anspruch 1,
**dadurch gekennzeichnet, daß** um die Durchgangsbohrung (21) ein ringförmiger Ansatz (24) innen an der Bodenwand (23) angeformt ist, auf der der Dichtungskörper (25) aufliegt.

4. Sahneapparat nach Anspruch 1,
**dadurch gekennzeichnet, daß** der Dichtungskörper (25) eine Napfform hat mit einer geschlossenen Bodenwand (26), an deren Unterseite eine Dichtungsscheibe (27) aus Teflon anliegt.

5. Sahneapparat nach einem der Ansprüche 1 bis 4,
**dadurch gekennzeichnet, daß** zwischen der Umfangswand des Dichtungskörpers (25) und der Innenwand des Sicherheitsventilgehäuses (21), wenigstens eine Zwischenraum verbleibt.

6. Sahneapparat nach einem der Ansprüche 1 bis 5,
**dadurch gekennzeichnet, daß** der Sahne-Auslaßkanal (4) seitlich ein die Ventilstift-Bohrung (3) einmündet.

7. Sahneapparat nach einem der Ansprüche 1 bis 6,
**dadurch gekennzeichnet, daß** eine langgestreckte Vertiefung (14) in der Umfangswand des Ventilstiftes (10) ausgebildet ist, die in der Öffnungsstellung des Ventilstiftes (11) zumindest von dem freigegebenen Ventilsitz (12) bis zur Einmündung (15) des Sahne-Auslaßkanals (4) reicht und daß eine Sicherheitsventilbohrung (19,20) durch den Endabschnitt des Ventilstiftes ( 10) verläuft und in die Vertiefung (14) einmündet.

8. Sahneapparat nach einem der Ansprüche 1 bis 7,
**dadurch gekennzeichnet, daß** der Ventilstift (10) an dem hülsenförmigen Abschnitt (17) hohl ausgebildet ist, mit einer die stirnseitige Öffnung der Sicherheitsventilbohrung (19) umgebenden Ringschulter (31), an der sich eine Schraubenfeder (29) abstützt, die mit ihrem anderen Ende an der Bodenwand (30) des Dichtungskörpers (25) anliegt.

9. Sahneapparat nach einem der Ansprüche 1 bis 8,
**dadurch gekennzeichnet, daß** die Gewindeabschnitte (25, 18) des Ventilstiftes (10) und des Sicherheitsventilgehäuses (21) so verklebt sind, daß die Verschraubung erst bei einer hohen Temperatur von vorzugsweise 200°C lösbar ist.

## Claims

1. A whipped cream apparatus comprising a container into which liquid cream is filled, and a head member (1) which is screwed thereon and comprises receiving means (6) for a compressed-gas capsule for whipped cream, said capsule being connected through a compressed-gas bore (9) to the interior of the container, a valve pin (10) which is displaceably seated in a valve pin bore (3) passing through the head member (1), and a cream outlet channel (4) for the finished cream, the valve pin (10) being provided with a safety valve (21, 25, 29) which, when a predetermined pressure is exceeded in the container, releases a passage (19, 20) between the interior thereof and the cream outlet channel (4),
**characterized in**
**that** the valve pin comprises a valve disk ring (11) which is followed by a sleeve-like section (17) with a thread (18) that is in engagement with a thread of a safety valve housing (21), that the safety valve housing (21) has a bottom wall (23) with a passage bore (22), and that a sealing body (25) is pressed against the bottom wall. .

2. The whipped cream apparatus according to claim 1,
**characterized in that** the valve disk ring (11) in the closed position rests on a valve seat (12) of the valve pin bore (3), with an O-ring being disposed thereinbetween.

3. The whipped cream apparatus according to claim 1,
**characterized in that** an annular shoulder (24) is internally molded around the passage bore (21) on the bottom wall (23) on which the sealing body (25) rests.

4. The whipped cream apparatus according to claim 1,
**characterized in that** the sealing body (25) has the shape of a cup with a closed bottom wall (26), on the bottom side of which a washer (27) of Teflon is positioned.

5. The whipped cream apparatus according to any one of claims 1 to 4,
**characterized in that** at least an intermediate space remains between the circumferential wall of the sealing body (25) and the inner wall of the safety valve housing (21).

6. The whipped cream apparatus according to any one of claims 1 to 5,
**characterized in that** the cream outlet channel (4) laterally terminates in the valve pin bore (3).

7. The whipped cream apparatus according to any one of claims 1 to 6,
**characterized in that** an elongated recess (14) is formed in the circumferential wall of the valve pin (10) which in the opening position of the valve pin (11) extends at least from the released valve seat (12) up to the mouth (15) of the cream outlet channel (4), and that a safety valve bore (19, 20) extends through the end section of the valve pin (10) and terminates into the recess (14).

8. The whipped cream apparatus according to any one of claims 1 to 7,
**characterized in that** the valve pin (10) is made hollow on the sleeve-like section (17), with an annular shoulder (31) which surrounds the opening of the safety valve bore (19) at the front side and on which a helical spring (29) is supported that rests with its other end on the bottom wall (30) of the sealing body (25).

9. The whipped cream apparatus according to any one of claims 1 to 8,
**characterized in that** the threaded sections (25, 18) of the valve pin (10) and of the safety valve housing (21) are adhesively bonded such that the screw union will only be detachable at a high temperature of preferably 200°C.

## Revendications

1. Appareil pour faire de la crème chantilly, comportant un récipient dans lequel est introduit de la crème liquide, et un élément de tête (1) vissé dessus qui est muni d'un dispositif de réception (6) destiné à une capsule de gaz comprimé pour crème, lequel est relié à l'intérieur du récipient par un perçage (9) pour gaz comprimé, d'une tige de soupape (10) qui est disposée de façon mobile dans un perçage (3) de tige de soupape traversant l'élément de tête (1), et un canal de sortie (4) pour la crème chantilly préparée, la tige de soupape (10) étant munie d'une soupape de sûreté (21, 25, 29) qui, lors du dépassement d'une pression prédéterminée dans le récipient, libère un passage (19, 20) entre l'espace intérieur du récipient et le canal de sortie (4) de crème chantilly
**caractérisé en ce que**
la tige de soupape (10) comporte un anneau (11) de tête de soupape auquel se raccorde un tronçon (17) en forme de douille avec un filetage (18), qui est en prise avec un filetage d'un corps (21) de soupape de sûreté, **en ce que** le corps (21) de soupape de sûreté comporte une paroi de fond (23) avec un perçage de passage (22), et **en ce qu'**un corps d'étanchéité (25) est appliqué contre la paroi de fond.

2. Appareil à crème chantilly selon la revendication 1,
**caractérisé en ce que**, dans la position de fermeture, l'anneau (11) de tête de soupape s'applique contre un siège (12) de soupape du perçage (3) de tige de soupape par l'intermédiaire d'un joint torique.

3. Appareil à crème chantilly selon la revendication 1,
**caractérisé en ce qu'**un épaulement annulaire (24) est formé autour du perçage de passage (21) à l'intérieur de la paroi de fond (23), sur lequel prend appui le corps d'étanchéité (25).

4. Appareil à crème chantilly selon la revendication 1,
**caractérisé en ce que** le corps d'étanchéité (25) a une forme de godet avec une paroi de fond fermée (26), contre la face inférieure de laquelle s'applique une rondelle d'étanchéité (27) en téflon.

5. Appareil à crème chantilly selon l'une quelconque des revendications 1 à 4,
**caractérisé en ce qu'**il subsiste au moins un espace intermédiaire entre la paroi périphérique du corps d'étanchéité (25) et la paroi intérieure du corps (21) de la soupape de sûreté.

6. Appareil à crème chantilly selon l'une quelconque des revendications 1 à 5,
**caractérisé en ce que** le canal de sortie (4) de crème chantilly débouche latéralement dans le perçage (3) de la tige de soupape.

7. Appareil à crème chantilly selon l'une quelconque des revendications 1 à 6,
**caractérisé en ce qu'**un renfoncement oblong (14) est pratiqué dans la paroi périphérique de la tige de soupape (10), qui, dans la position d'ouverture de la tige de soupape (11), s'étend au moins du siège (12) de soupape libéré jusqu'au débouché (15) du canal de sortie (4) de crème chantilly, et **en ce qu'**un perçage (19, 20) de soupape de sûreté passe par le tronçon d'extrémité de la tige de soupape (10) et débouche dans le renfoncement (14).

8. Appareil à crème chantilly selon l'une quelconque des revendications 1 à 7,
**caractérisé en ce que**, au niveau de son tronçon (17) en forme de douille, la tige de soupape (10) est agencée de façon creuse avec un épaulement annulaire (31) entourant l'orifice frontal du perçage (19) de la soupape de sûreté, sur lequel prend appui un ressort cylindrique (29), qui s'applique par son autre extrémité contre la paroi de fond (30) du corps d'étanchéité (25).

9. Appareil à crème chantilly selon l'une quelconque des revendications 1 à 8,
**caractérisé en ce que** les tronçons filetés (25, 18) de la tige de soupape (10) et du corps (21) de la soupape de sûreté sont collés entre eux de telle sorte que le vissage ne puisse être dissocié qu'à une température élevée, qui est de préférence de 200 °C.
